# EUROPEAN PATENT APPLICATION

(11) **EP 4 319 225 A1**
(43) Date of publication of application: **07.02.2024**
(21) Application number: 22306172.2
(22) Date of filing: 02.08.2022
(51) Int. Cl.: H04W 8/18, H04W 4/08, H04W 24/00

(54) **SERVICE-BASED CLUSTERING DETERMINATION FOR 5G DEPLOYMENT IN FACTORIES**

(71) Applicant: Mitsubishi Electric R&D Centre Europe B.V., 1119 NS Schiphol Rijk Amsterdam (NL); MITSUBISHI ELECTRIC CORPORATION, Chiyoda-ku Tokyo 100-8310 (JP)
(72) Inventor: BONNEVILLE, Hervé, 35708 RENNES CEDEX 7 (FR); KHANFOUCI, MOURAD, 35708 RENNES CEDEX 7 (FR); GRESSET, Nicolas, 35708 RENNES CÉDEX 7 (FR)
(74) Representative: Plasseraud IP

(57) **Abstract**

The invention relates to a method for determining a repartition of a set of user equipments handled by a wireless communication system,
The wireless communication system comprises a core network component comprising a network functional entity (NWDAF and/or NEF).

The method comprises, at the network functional entity, obtaining a grouping criterion from a requesting party, and providing to the requesting party a repartition of at least part of the set of user equipments into groups of user equipments formed according to said grouping criterion.

The invention further relates to a corresponding communication system and a corresponding computer program.

## Description

### Technical Field

This disclosure pertains to the field of telecommunications.

The disclosure more particularly relates to a method for determining a repartition of a set of user equipments handled by a wireless bridge of a communication system within a time-sensitive network. The disclosure also relates to a corresponding communication system and to a corresponding computer program.

### Background Art

This disclosure addresses the problem of using a 5G network as a communication means for a time sensitive network (TSN), which was initially developed for providing guaranteed communications on ethernet wired networks for industrial applications.

By convention in the current TSN standards, when flowing through a TSN bridge, an end-to-end delay is computed by taking into account the aggregated delays of the transport link between the previous bridge (external link) on the path and the internal link of the bridge between the input (ingress) and output (egress) ports. In a typical TSN network, these aggregated delays are considered in a central scheduler, or central network configuration node (CNC), that guarantees that no packet collision occurs on the transport links in the time domain.

In the context of a one-to-many bridge, the bottleneck lies in the external transport link, on which a TDMA (Time Division Multiple Access) strategy is applied as a result of the CNC scheduling. Even though the internal links of the bridges can be used concurrently, they are in practice used sequentially as a result of the TDMA on the input transport link. The impact on performance is minor when the capacity of the internal links is much higher than the one of the transport link. However, the convention of considering aggregated delays induces significant performance degradation when the internal links capacity is comparable to or worse than the external link one. Indeed, the bridge capability is limited by not exploiting the possibility of using internal links concurrently.

Such a situation occurs when considering a 5G TSN bridge, wherein the internal links capacity is related with the wireless transmission capacity, which is in general worse than the input link capacity relying on wired ethernet. By using the state-of-the-art model and representing the 5GS as a one-to-many topology, a TDMA strategy is applied among all packets flowing though the 5G TSN bridge. Unfortunately, the TDMA is often not the best multiplexing scheme for a wireless network, as other multiplexing dimensions can be exploited with an improved performance. Examples of multiplexing dimensions include frequency (using several sub-bands in the frequency domain), space (using multiple antennas) and site (frequency reuse among several non-interfering sites). Thus, the state-of-the-art definition of a model of the 5G TSN bridge fails to exploit the multiplexing capability of a 5GS, which results in a sub-optimal performance.

The time multiplexing capability of a 5GS is often well below the one of ethernet fixed networks. For example, the minimal time unit of a 5GS is a slot, which lasts at least a hundred microseconds while the maximum frame duration on a gigabit ethernet link is around 12 microseconds. Thus, the low time granularity of the 5GS is taken into account in the declaration of the independent delay as a price to pay for any frame transmission. This is necessary as the dependent and independent delays are used in the CNC to compute guaranteed delays. However, the 5GS relies on a wireless interface which naturally allows broadcasting. This involves that several data flows can be transmitted concurrently with a variable capacity according to the deployment, terminal positions and channel conditions, number of data flows sharing the wireless channel concurrently, and so on. This multiplexing capability of the 5GS is not inherently taken into account when considering the state-of-the-art 5GS TSN bridge representation. Indeed, with this bridge model, the CNC presents packets at the bridge input in a TDMA fashion, following the low internal time granularity of the 5GS.

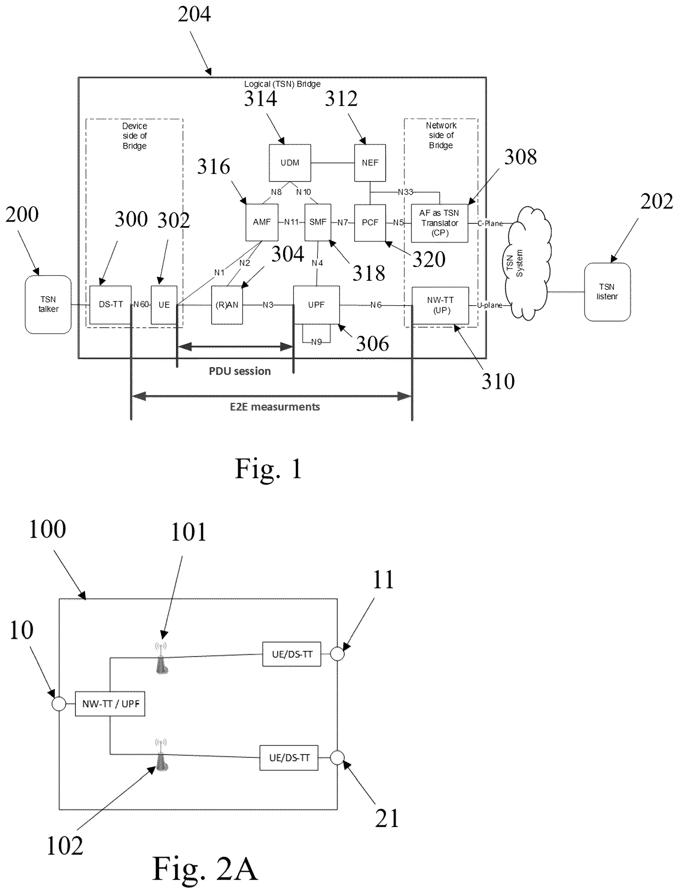

Figure 1 illustrates a known integration of a 5GS acting as an Ethernet bridge in a TSN network according to the 3GPP technical report TR 23.734. In this framework, the 5GS comprises, on a network side (NW-TT) (310), one or more ports on a single user plane function (UPF) (306), the ports acting as user plane tunnels between the UPF and user equipments (UE) (302) through a radio access network (304). The 5GS acting as an Ethernet bridge further comprises, on a device-side (DS-TT) (300), one port per user equipment. For each 5GS Bridge of a TSN network, the port on the NW-TT side supports the connectivity to the TSN network, while the ports on DS-TT side are, each, associated to a corresponding protocol data unit (PDU) session providing connectivity to the TSN network according to the 3GPP technical specification TS 23.501.

In Figure 1, it is shown that the logical bridge configuration information is transmitted to the TSN network via a trusted TSN application function (AF) (308). This configuration information is related to network status and performance parameters that are received from the access management function (AMF) (316) by the session management function (SMF) (318) in the unified data management (UDM) (314) and transmitted to the AF (308) via the network exposure function (NEF) (312), using the N33 interface according to the 3GPP technical specification TS 23.502 or directly from the policy charging function (PCF) (320), via the N5 interface, if the AF is considered as trusted.

In order to improve the system performance and exploit the multiplexing capability of a wireless communication system such as a 5GS and compensate its low time granularity, it is needed to design a better model of such wireless communication system.

### Summary

This disclosure improves the situation.

It is proposed a method for determining a repartition of a set of user equipments handled by a wireless communication system, the wireless communication system comprising a core network component comprising a network functional entity comprising a network data analytics function (NWDAF) and/or a network exposure function (NEF), the method comprising, at the network functional entity:
- obtaining a grouping criterion from a requesting party, and
- providing to the requesting party a repartition of at least part of the set of user equipments into groups of user equipments formed according to said grouping criterion.

The above method allows signaling and/or exposing clustering capabilities, corresponding to clusters of user equipments handled by the RAN of a wireless communication system, to a requesting party.

In the case where the wireless communication system comprises a 5G system, the requesting party may be internal to the core component of the 5GS, and may be a core network function (NF) or an application function (AF). For instance, the requesting party may be a TSN application function, configured to be a source of input to a central network configuration node (CNC) of a time-sensitive network (TSN). In this example, the above method improves the performance and the integration of a 5GS bridge by the CNC.

More generally, the above method allows improving the performance and the integration of a wireless communication system in any type of network under any protocol, provided said network comprises a managing entity configured to receive the repartition from the requesting party.

In another aspect, it is proposed a computer software, or program, comprising one or more instructions to implement at least a part of a method as defined here when the software is executed by a processor. In another aspect, it is proposed a computer-readable non-transient recording medium on which a software is registered to implement the method as defined here when the software is executed by a processor.

In another aspect, it is proposed a wireless communication system handling a set of user equipments,
the wireless communication system further comprising a core network component comprising a network functional entity comprising a network data analytics function (NWDAF) and/or a network exposure function (NEF), the network functional entity being configured for:
- obtaining a grouping criterion from a requesting party, and
- providing to the requesting party a repartition of at least part of the set of user equipments into groups of user equipments formed according to said grouping criterion.

The following features can be optionally implemented, separately or in combination one with the others.

In an example, the requesting party is an application function of the core network component, such as a Time Sensitive Network application function.

In an example, the grouping criterion is associated to a list of user equipments provided by the requesting party and the repartition provided to the requesting party relates to a filtered set of user equipments obtained by filtering the set of user equipments according to the list.

For instance the list of user equipments may correspond to radio devices that are associated to industrial equipments to be managed within a TSN network and that are configured to communicate with at least part of the TSN network through the wireless communication system.

Transmitting, to the TSN-AF, a list of clusters determined based on a given criterion then allows the TSN-AF to determine a communication system model in terms of ports and guaranteed dependent and independent delays. This allows the CNC to best schedule communication with the list of industrial equipments by accounting for these delays.

The clusters provide insight about discrepancies related to how the wireless communication system serves different UEs, from the point of view of the grouping criterion.

In an example, the grouping criterion relates to:
- a multiplexing capability of the wireless communication system, and/or
- an independent quality of experience provided at the user equipments by the communication system,
- a radio quality of communication channels between the user equipments and the wireless bridge and/or
- a mobility behavior of the user equipments.

Discrepancies in terms of multiplexing capabilities mean that UEs are handled by the wireless bridge in such a way that some communications with different UEs are orthogonalized while others are not. In other words, some subsets of UEs may be handled by the same base station using the same physical channel, while other subsets of UEs may be handled either by different base stations, or by the same base stations but without using the same physical channel, or using different independent radio resources, or using different radio beams.

Discrepancies in terms of radio quality means for instance that some physical channels, used by base stations to handle UEs, exhibit a higher packet loss rate or a greater latency than others. UEs may for instance be assigned to different groups depending on the distance from their serving base station.

Discrepancies in terms of mobility behavior means for instance that, in a deployment of UEs evolving over time due to a geographical displacement of UEs, some UEs tend to remain static while others tend to move at different speeds, with different implications on the topology of the wireless bridge and on the dependent and independent delays associated to further communicate with the deployed UEs.

In an example, the grouping criterion relates to a data flow performance through the wireless bridge, and upon obtaining the grouping criterion, the network functional entity triggers measurements related to said data flow performance in order to determine the repartition.

In this example, the required measurements are conducted only after receiving the grouping criterion, which is advantageous for minimizing traffic use. Alternately, all required measurements may already be conducted for different types of grouping criteria in anticipation of receiving a specific grouping criterion and directly selecting the most appropriate measurements.

In an example, the core network comprises a user plane function, and triggering measurements related to said data flow performance comprises requesting the user plane function to monitor a quality-of-service performance either on an existing traffic or by initiating a traffic injection.

The UPF is able to monitor end-to-end quality of service, and as a result may provide clusters of UEs that account for discrepancies in terms of QoS at the level of the wireless bridge as a whole, rather than by only considering the radio part of the network.

In an example, the wireless bridge further comprises a radio access network, the grouping criterion relates to a data flow performance through the radio access network, and the method further comprises, at the network functional entity, interrogating the radio access network upon clustering information related to the grouping criterion, and obtaining the repartition determined based on the clustering information.

RAN-level information is quick to obtain from the various base stations, and is accurate in that it is directly related to the actual topology of the RAN.

In an example, the radio access network comprises a plurality of base stations and the method further comprises: per base station, determining the clustering information for said base station . The method may further comprise gathering, at the radio access network or at the core network component, the clustering information from each base station, and the repartition may be determined based on the gathered clustering information.

This example shows a possible way of centralizing RAN-level information originating from multiple base stations.

Optionally, the core network component may trigger measurements related to the grouping criterion in order to determine the repartition.

This example shows a possible way of monitoring end-to-end QoS information, that may be processed using machine-learning, such as by using an auto-encoder, to automatically identify common patterns relating to how UEs are handled by the wireless bridge and to automatically determine the clusters.

### Brief Description of Drawings

Other features, details and advantages will be shown in the following detailed description and on the figures, on which:
**Fig. 1**
   [Fig. 1] illustrates a state-of-the-art integration of a wireless bridge within a TSN network.
**Fig. 2A****,** **2B****,** **2C****,** **2D**

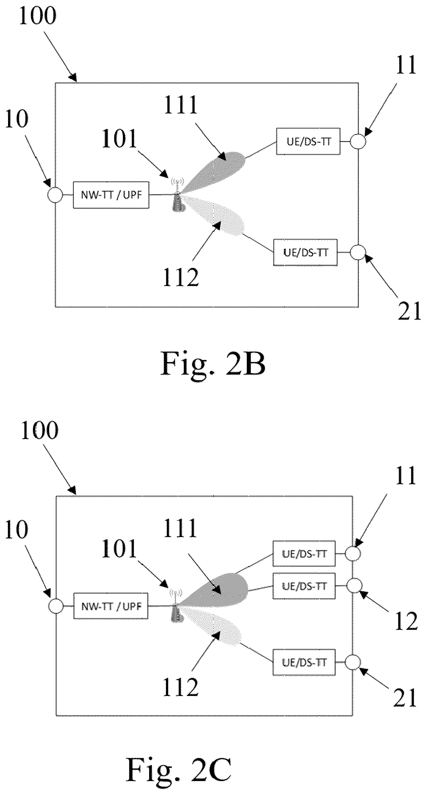

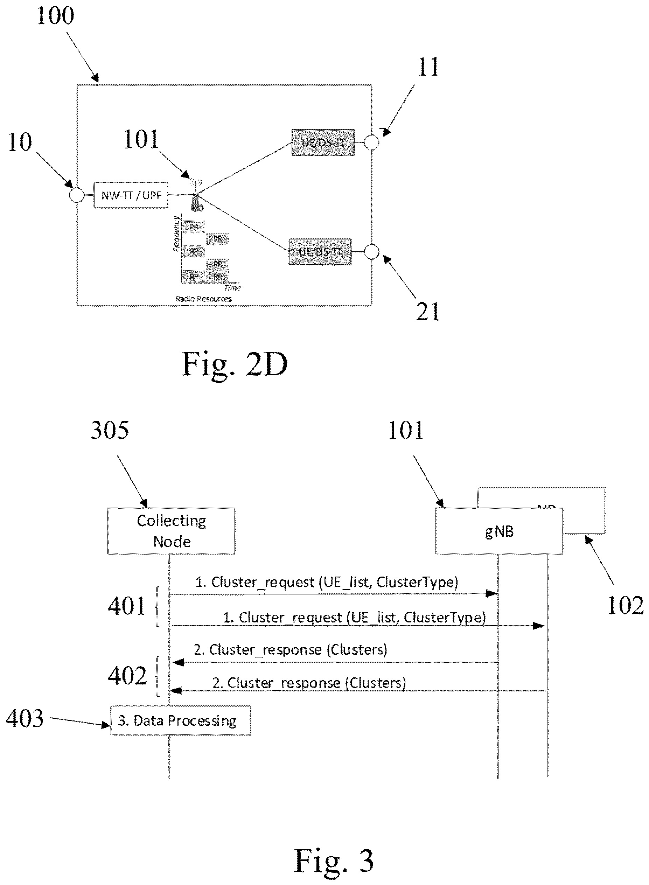

   [Fig. 2A] illustrates spatial and frequency multiplexing between different node base stations of a wireless bridge according to an embodiment. [Fig. 2B] and [Fig. 2C] both illustrate spatial multiplexing using multiple antennas at a node base station of a wireless bridge according to an embodiment. [Fig. 2D] illustrates time frequency multiplexing through static scheduling or slicing at a node base station of a wireless bridge according to an embodiment.
**Fig. 3**
   [Fig. 3] illustrates a general algorithm for gathering clustering information at a collecting node from a plurality of base stations, according to an embodiment.
**Fig. 4**

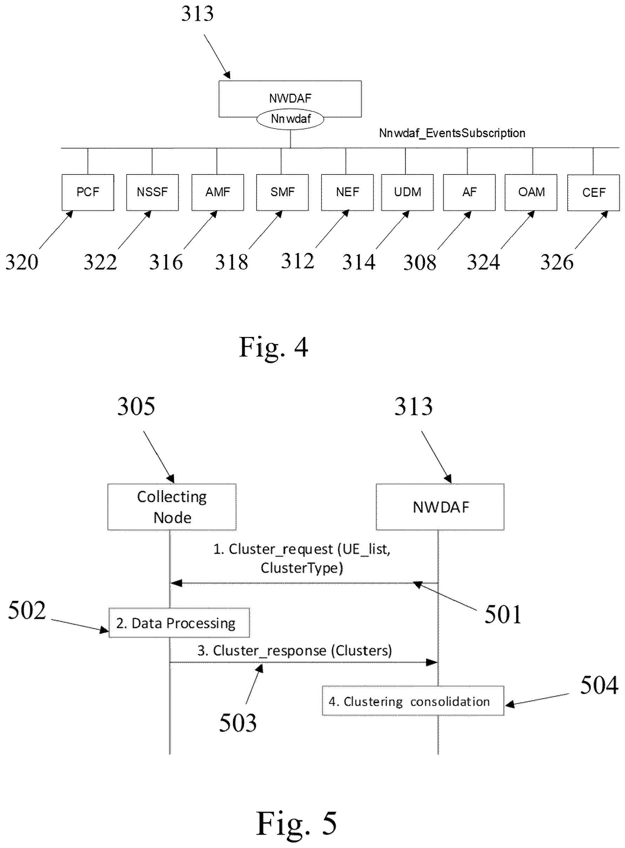

   [Fig. 4] illustrates a NWDAF service-based interface according to an embodiment.
**Fig. 5**
   [Fig. 5] illustrates a cluster information exposure to the NWDAF according to an embodiment.
**Fig. 6**

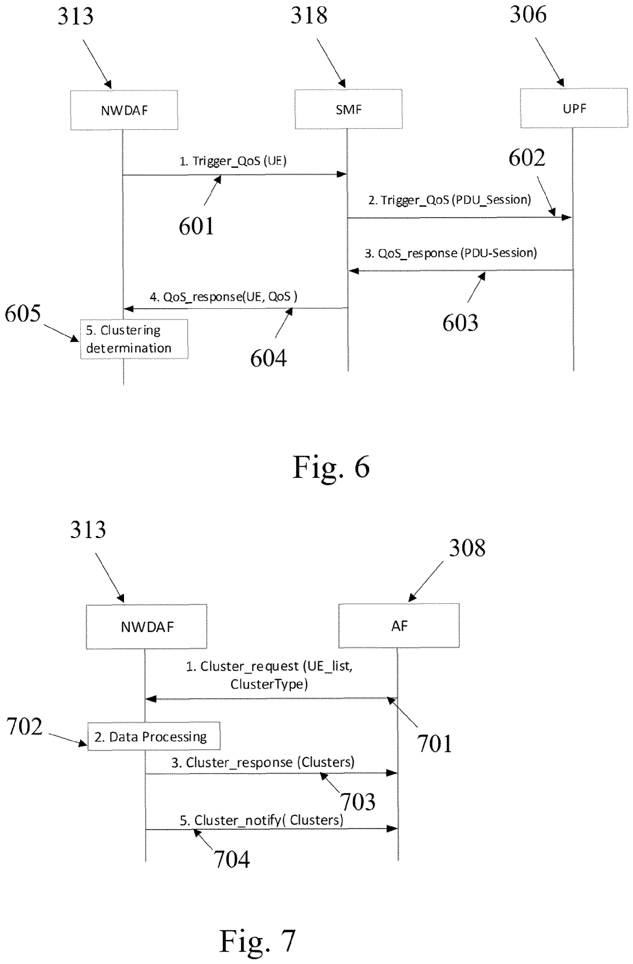

   [Fig. 6] illustrates a cluster information determination in the NWDAF according to an embodiment.
**Fig. 7**
   [Fig. 7] illustrates a cluster information exposure from the NWDAF to an AF according to an embodiment.
**Fig. 8**

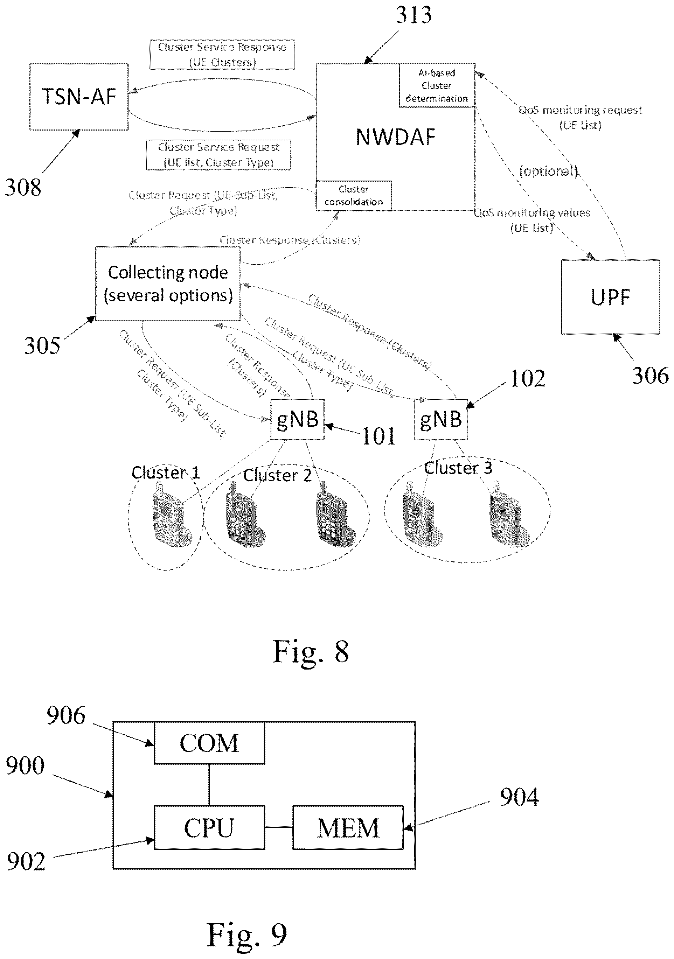

   [Fig. 8] is a general overview of a cluster determination method according to multiple embodiments.
**Fig. 9**
   [Fig. 9] is an example of a processing circuit, suitable for running any of the algorithms represented on Fig. 5, 6, 7 and 8, according to an embodiment.

### Description of Embodiments

The disclosure addresses the problem of quickly obtaining, at the central network configuration node (CNC) of a TSN network, reliable multiplexing capabilities of a wireless communication system. In a particular example, the wireless communication system comprises a logical bridge integrated to the TSN network. In particular, the wireless logical bridge may be a 5G system (5GS) acting as a logical bridge.

A more general aim is to extend the current framework for data analytics in wireless communication systems that include for instance 5G networks, to handle the determination and the exposing, by such wireless communication systems, of clusters of UEs depending of a grouping criterion.

The grouping criterion may be relative to radio access network criteria, such as 'Independent Quality of Experience (QoE)' or radio quality; the criterion may also be relative to UE mobility behaviour.

Indeed, in the current 3GPP specifications, there are no means for:
- integrating and/or exposing UE clustering information determined by the 5G system to third parties such as an application function (AF), or to an internal network function (NF) of the network;
- triggering group related information from e.g. the RAN; or
- consolidating and updating group related information from e.g. the RAN in a network data analytics function (NWDAF) or in a network exposure function (NEF).

New signalling and new functionalities are thus proposed herein as an analytics service handled by the NWDAF and/or NEF. This analytics service aims to solve the above-mentioned issues and to improve the integration and performance of a virtual bridge to a TSN network.

The proposed analytics service is able to expose UE clusters that have been determined to a requesting party, namely a network function NF. The network function may be either a standard 5G core (5GC) network function like access and mobility function (AMF), UDM, ...etc, or a specific application function (AF).

The general principle of the proposed service is that a grouping criterion is provided by a requesting party to the network, and the network then determines some UE clustering based on this criterion for the benefice of the requesting party.

This approach is fundamentally different from the state of the art related to UE grouping, where an application typically provides information to the network about UEs that can be grouped together and possibly managed as a group by the network.

The key components of said analytics service are described in the following section for clusters determined according to the so-called 'Independent Quality of Experience (QoE)' grouping criterion.

The analytics service may also be used, with the same architecture, to determine clusters according to other grouping criteria.

### Determining clustering/grouping information

Hereafter is described a method to determine clusters of UEs according to a so-called independent quality of experience grouping criterion.

In the following, a UE is said 'activated' when it is involved in the transmission or reception of at least one data flow. A UE is said 'non activated' when it is not involved in the transmission or reception of any data flow.

Let us consider a pair of UEs. The pair is said 'dependent' if the QoS performance at one UE of the pair changes whether the other UE of the pair is simultaneously active or not.

More specifically, it is possible to define a sequential communication performance and a concurrent communication performance. The concurrent communication performance is reflected by the QoS performance of a given data flow transmitted or received by a UE of the pair for an activation topology where both UEs are activated together. The sequential communication performance is, on the contrary, reflected by the QoS performance of the given data flow for an activation topology where both UEs are activated one by one rather than together.

This principle applies more generally to any group of two or more UEs. The sequential communication performance then designates the QoS performance of a given data flow transmitted or received by a UE of the group when no other UE of the group is simultaneously activated. The concurrent communication performance of the given data flow designates the QoS performance of the given data flow when at least one other UE of the group is simultaneously activated.

The absolute value of the difference between the sequential and the concurrent communication performance of a given data flow may be computed and is referred to in the following as "QoS performance change". When a data flow transmitted or received by a UE of a group of UEs exhibits a QoS performance change that exceeds a predetermined threshold, then the UE is said dependent of the group of UEs. Otherwise, the UE is said independent of the group of UEs. The threshold may be preset to a non-zero value that may be positive or negative. The sign and the absolute value of the threshold are chosen depending on the application.

A group of dependent UEs is also called herein a "cluster of UEs related to an 'Independent Quality of Experience (QoE)' grouping criterion", or simply a "cluster". The notion of independent quality of experience originates from the fact that a group of UEs all belonging to different clusters is a group of independent UEs. In other words, considering any group of UEs all belonging to different clusters, the QoS performance change for any data flow transmitted or received by a UE of said group does not exceed the predetermined threshold.

More specifically, according to the independent quality of experience criterion, UEs belong to the same group if their concurrent activation decreases the performance of at least one data flow of at least one of said UEs, with respect to the data flow performance obtained when the UEs are each activated alone, sequentially. For any set of UEs all belonging to different groups, their concurrent activation does not decrease any data flow performance with respect to the one obtained when the UEs of the set are activated alone.

The difference between the performance of the at least one data flow under concurrent activation and under sequential activation conditions may result of a topological analysis of the wireless bridge and/or may result of data flow performance measurements. In the latter case, the difference between such measurements may be automatically compared to a predetermined, absolute or relative, non-zero threshold in order to unequivocally determine whether such difference corresponds or not to a decrease in performance.

Let us consider some examples of UE deployments in which the concurrent transmission of packets does not degrade the data flow performance at each UE, and thus exhibits various types of multiplexing capabilities.

Figures 2A, 2B, 2C and 2D illustrate four exemplary scenarios for multiplexing statuses in the case of the integration of a 5G system (5GS) with a TSN network.

Figure 2A illustrates a deployment of two UEs served by two different gNBs (101, 102). Each UE is connected to a corresponding device-side (DS) port (11, 21). The radio access network is usually designed such that no significant interference is observed in the downlink or uplink of neighboring gNBs. This can be achieved, for instance: by using different frequency bands, by controlling the power of gNBs and UEs and/or by using mixed frequency/power control, known as inter-cell interference coordination.

As a result, the data transmission from/to any UE handled by a first gNB (101) does not impact the performance of a data transmission from/to any UE handled by a second gNB (102). Such multiplexing capability belongs to frequency and spatial multiplexing as the transmissions are isolated from each other thanks to the spatial configuration of the transmitter and receiver, and/or to an orthogonality in the frequency band usages.

In this case, when distributing the UEs handled by the wireless bridge in a plurality of groups, based on the determined multiplexing capabilities of the wireless bridge, two clusters may for example be formed: one formed of all UEs handled by the first gNB, the other formed of all UEs handled by the second gNB. More generally, in this case, more than two clusters may be formed if additional multiplexing capabilities of the wireless bridge are identified. Yet, none of the formed clusters can comprise both a UE handled by the first gNB (101) and a UE handled by the second gNB (102).

Figure 2B illustrates a deployment of two UEs within the coverage of the same gNB (101), where the gNB is equipped with multiple antennas and generates, for example, multiple beams (111, 112). Different multi-antenna technologies, such as beamforming as represented in Figure 2B, allow to orthogonalize the transmission of several UEs in a multi-antenna spatial dimension. This involves that two UEs can use the same time frequency resource without a significant performance loss. Thus, in this example, these two UEs may be distributed in two different groups of UEs.

In some cases, as shown in Figure 2C, and in particular when the UEs are spatially close to each other, the UEs cannot be orthogonalized through multi-antenna techniques.

In Figure 2C, three UEs are represented:
- a first UE, connected to a first DS port (11), is handled by a gNB (101) using a first antenna generating a first beam (111),
- a second UE, connected to a second DS port (12), is handled by the gNB (101) using the first antenna generating the first beam (111), and
- a third UE, connected to a third DS port (21), is handled by the gNB (101) using a second antenna generating a second beam (112).

The first and the second UEs are considered spatially close together, so that they are both reached by the gNB by using the same antenna.

Assuming that the first and the second UEs are not orthogonalized, then a first group of UEs comprising the first and the second UEs can be formed and a second group of UEs comprising the third UE can be formed, following the definition of groups given above, according to the multi-antenna spatial orthogonality given by the multi-antenna techniques used at the base station and UEs.

In Figure 2D, two UEs, connected to different DS ports (11, 21), are under the coverage of the same gNB (101). One strategy for the gNB can be to allocate semi-statically a given share of the resources to the active UEs, whatever the status of their traffic (i.e., before knowing whether a packet will be available for transmission or not). For example, semi-persistent scheduling may achieve such result in order to guarantee a QoS for guaranteed bit rate (GBR) traffic. As a result, whatever the data traffic for each UE, their performance is independent. In this case, the two UEs may be affected to different clusters, following the definition of clusters given above.

As shown in the examples of Figures 2A, 2B, 2C and 2D, by analysing the deployment and capabilities of orthogonalization of transmission related to several UEs, it is possible to group the UEs such that UEs belonging to the same group have a competitive access to the radio resources (i.e., they impact each other's performance when activated concurrently), while any UEs belonging to different groups are independent performance-wise.

Typically, UEs each served by a different base station may belong to different clusters. Further, UEs each served by the same base station over a different beam may also belong to different clusters.

There are different ways to assess multiplexing capabilities of the wireless bridge in order to determine the clusters of UEs according to the 'Independent Quality of Experience (QoE)' grouping criterion. In the context of the present document, applying the 'Independent Quality of Experience (QoE)' grouping criterion implies performing an objective assessment, by an entity of the communication system, about whether UEs impact each other's performance or not when activated concurrently.

For instance, for a number of data flows transmitted through the wireless bridge, each using a different data path, it is possible to perform measurements related to performance of each said data flow. To do so, each gNB may perform radio measurements for the radio bearers to be transmitted to the UEs (Downlink) and/or for the radio bearers to be transmitted from the UEs to gNB (Uplink). These measurements may be performed with respect to the multiplexing status at the base station which may include a spatial, a frequency and/or a time dimension. When such measurements are performed, clustering information is determined at a base station level.

Base stations may also determine their multiplexing capabilities based on their configuration and internal policy, without a need for any active data flow. Indeed, base stations are aware of multiplexing capabilities of the UEs they are serving, which depend on factors such as the beams they use, their scheduling policies, the carrier frequency they aggregate, the UE position they determine, or the slicing they use. Base stations may further initiate some measurements to identify additional multiplexing capabilities of the RAN.

The multiplexing capabilities of the wireless bridge may also be determined, for example, from a topological analysis of the wireless bridge, including for instance:
- known locations of base stations and of UEs,
- known radio conditions between base stations and UEs, and/or
- known base station scheduling configuration.

### Gathering clustering/grouping information from multiple base stations

A node of the wireless system is chosen as a collecting node (305) for gathering clustering information from multiple gNB nodes in the radio access network.

The collecting node may be a node from the RAN. The location of the base stations with respect to one another may be a key criterion for choosing the collecting node. For instance, a gNB that is neighbour to all the other deployed gNBs is geographically central within the RAN. A collecting node which has a geographically central location allows generally minimizing communication delays related to gathering the clustering information from all deployed gNBs through radiocommunication.

Alternately, the collecting node may be a node from the core network. Examples of nodes from the core network that may be chosen as the collecting node include in particular:
a data collection coordination and delivery function node (DCCF) as defined in nplcit1, section 6.2.24, an access and mobility management function node (AMF), where specific signalling over the control interface N2 between the gNB and the AMF is added to handle the clustering information of the UEs, and where UE context may be updated to associate the UE with a specific cluster,
a universal data management node (UDM), where the stored UE context is updated to include the clustering information,
a management data analytics function (MNDAF), as described in nplcit5, and
an operations, administration and maintenance function node (OAM), hosting the clustering information and transmitting it to the network data analytics function node (NWDAF).

The collecting node may trigger clustering information updates from multiple gNBs as shown in Figure 3.

To do so, the collecting node issues requests (401) to multiple gNBs (101, 102). The requests comprise a parameter noted UE-list, which provides a list of UEs of interest. It is assumed that the collecting node is aware of the binding between UEs and its serving gNB. The requests further comprise another parameter, noted ClusterType, which defines the type of clustering that is requested. Examples of cluster types are 'Independent Quality of Experience' (QoE), 'Radio quality', or 'Mobility behavior'. Depending of the cluster type requested, additional parameters could be provided. For example, a 'Radio quality' cluster type may be associated with some threshold or bins values defining more precisely the criteria for the cluster determination.

Each gNB responds to the request it has received. The response (402) from a given gNB comprises a parameter noted Clusters, which provides a list of clusters that has been determined at the given gNB. Each cluster is composed of a list of UEs, identified among the list of UEs of interest provided in the request.

The collecting node then processes (403), for example gathers, the responses to the requests.

### Consolidating and exposing the clustering/grouping information

The exposing of the clustering information may involve providing information related to the clustering evolution in time, spatial validity or any other statistic that is relevant to the description of the long-term behaviour of the clusters.

The exposing of the clustering information may also involve providing predictions related to the long-term behaviour of the clusters, the cluster members or the cluster parameters.

For all these reasons, it is proposed to include this clustering service as a new analytics service that is provided by the network data analytics function (NWDAF) and/or by the network exposure function (NEF), both of which may be represented as a single network functional entity of the core network component of a 5G system.

The current network data analytics function (NWDAF) is described in the 3GPP technical specifications TS 23.288 and 29.250 for stage 3.

The NWDAF is part of the architecture specified in the 3GPP technical specification 23.501, and uses the mechanisms and interfaces specified in said document for 5GC and OAM services (see in particular clause 6.2.3.1).

Figure 4 illustrates the service-based interface architecture for NWDAF (313).

The NWDAF (313) may be configured to interact with different entities for different purposes, such as:
- data collection based on subscription to events provided by AMF (316), SMF (318), PCF (320), UDM (314), AF (308) (directly or via NEF (312)), and OAM (324);
- retrieval of information from data repositories (e.g. UDR via UDM (314) for subscriber-related information);
- retrieval of information about NFs (e.g. from NSSF (322) or NRF for NF-related information);
- on demand provision of analytics to consumers;
- provision of bulked data to consumers.

A single instance or multiple instances of NWDAF may be deployed in a PLMN. If multiple NWDAF instances are deployed, the architecture supports deploying the NWDAF as a central network function (NF), as a collection of distributed (NFs), or as a combination of both. If multiple NWDAF instances are deployed, an NWDAF can act as an aggregate point (i.e. Aggregator NWDAF) and collect analytics information from other NWDAFs, which may have different Serving Areas, to produce the aggregated analytics (per Analytics ID), possibly with analytics generated by itself.

A key aspect disclosed herein is an enhancement of NWDAF/NEF with a new service of exposing clustering information to a requesting party. A general illustration of this new service is provided in Figure 7 and is discussed later. Of course, throughout the description, the clustering information to be exposed is assumed to be readily available at NWDAF/NEF. Various exemplary embodiments, discussed below with reference to Figures 5 and 6, detail possible ways of retrieving or determining the clustering information at NWDAF/NEF in view of exposing said cluster information to the requesting party.

### Cluster determination with a collecting node

NWDAF itself may be chosen as the collecting node (305) shown in Figure 3. In such a case, the clustering information is naturally gathered by NWDAF from the gNB. Alternately, when the collecting node (305) is different from NWDAF, the collecting node may be used to expose the clustering information to NWDAF (313) through the request/response basic diagram shown in Figure 5.

The NWDAF first provides (501) to the collecting node a cluster request containing a list of UEs and a grouping criterion.

Then the collecting node processes (502) the request and either determines or retrieves a repartition of the UEs of the list in clusters formed according to the grouping criterion.

This repartition is then provided (503) to the NWDAF as a response message and consolidated (504) at the NWDAF.

Such signaling is new with respect to the 3GPP technical specifications TS 23.288 and 29.250 and could be a future enhancement to these specifications.

### Cluster determination with measurements

Another option as part of the clustering service at the NWDAF/NEF is to provide statistics and predictions for the clustering information that is consolidated by the previous procedure by the means of the model training logical function MTLF described in section 5.1 of the 3GPP technical specification TS 23.288.

In an option, when the cluster type that is requested refers to quality of service, the NWDAF may determine directly the clusters by the means of monitoring quality of service (QoS) of the UEs that are provided in the UE_list input parameter list provided by the application function and/or predicted by the NWDAF-MTLF function.

The signaling related to this option is described in Figure 6. In this case the NWDAF/NWDAF-MTLF issues (601) a specific message, noted 'Trigger_QoS' to the session management function (SMF) for monitoring the QoS of each UE in the UE list. The 'Trigger_QoS' message comprises in particular a list of UE identifiers, a UE identifier corresponding to a UE in the UE list.

The SMF then modifies the content of the Trigger_QoS' message by translating the UE identifiers into PDU-Session identifiers. The SMF then triggers QoS monitoring of these specific PDU-sessions by issuing (602) the modified Trigger QoS message' to the user plane function (UPF).

The UPF is then able to provide (603) to the SMF, in a response message called 'QoS response', the requested QoS information related to the specific PDU-sessions. The SMF translates the PDU-Session identifiers from the 'QoS response' message back to UE identifiers.

Finally, the NWDAF or the NEF receives (604) the QoS information from the SMF along with the corresponding UE identifiers and is able to use this information to build (605) the clusters.

Various clustering algorithms may be applied to build clusters based on the QoS information received from the SMF along with the corresponding UE identifiers. An option for this purpose is to use an auto-encoder AI engine. The general principle of this specific use of an auto-encoder is described in another patent document from the same applicant, titled "Automatic TSN Model learning for 5G systems". Associated advantages include robustness and quickness of the clustering algorithm, without requiring supervision.

### Service overview

The new service proposed is then described in Figure 7.

The Application Function (308) provides (701) to the NWDAF (313) a list of UEs that the application is interested by, and the type of clustering that is requested. The NWDAF or NEF processes (702) the cluster request and as a result provides (703) to the application function (AF) the clustering information that is corresponding to the UE identifiers. Optionally, the NWDAF may further update, for instance periodically, the clustering information and notify (704) the AF, through an update message, with the updated clustering information.

UEs can be identified by their IP address, their Ethernet address, or by their SUPI (Subscription Permanent Identifier). UE identifiers in the UE_list can also be external application identifiers that may be translated by the UDM internal node into 5GS internal UE identifiers as described in section 5.9 of the 3GPP technical specification TS 23.501. The communication between the AF and UDM may be filtered by the means of network exposure function (NEF) once the UE list corresponding to the AF list is determined.

Figure 8 serves as a general overview of the above described exemplary embodiments.

As shown on Figure 8, the TSN-AF application function (308) communicates with the NWDAF (313), either directly or through the NEF (312), by emitting a cluster service request comprising, at least, a grouping criterion and receiving a cluster service response comprising a list of clusters of UEs, grouped according to the grouping criterion. The application function is then able to use the list of clusters in order to build an abstraction of the 5GS viewed as a bridge. In particular, when the grouping criterion is related to independent quality of experience, the abstraction of the 5GS built by the TSN-AF may be used by the CNC to build a TSN schedule that is optimized for the multiplexing capabilities of the 5GS.

Multiple options are open at the NWDAF for determining the list of clusters according to the grouping criterion.

For example, when the determination of the grouping criterion requires information related to end-to-end quality of service, QoS monitoring may be performed at the UPF (306) and an AI-based cluster determination may be conducted at the NWDAF/NEF based on the obtained QoS monitoring values.

For example, when the determination of the grouping criterion requires RAN-level information, the NWDAF may correspond with a collecting node (305) tasked with collecting, or gathering, the RAN-level information from multiple gNBs (101, 102) of the RAN.

Figure 9 schematically represents a processing circuit (900) suitable for running any one, or a plurality, of the algorithms described above. The processing circuit comprises a memory (904) for storing a computer program comprising said algorithm or algorithms. The processing circuit further comprises a processor (902) for accessing the memory and running the computer program. The processing circuit further comprises a communication interface (906), that may be controlled by the processor, for transmitting, at least, the topology, or topologies, of the time-sensitive network model to the centralized network configuration node within the communication system.

Of course, it is indifferent that the processor (902) uses a single core or multiple cores for running the computer program. Cloud computing technologies may also be used for the computer program to be run across processors of multiple processing circuits.

### Citation List

For any purpose, the following non-patent elements are cited:
- nplcit1: 3GPP TS 23.501, System architecture for the 5G System (5GS);
- nplcit2: 3GPP TS 23.288, Architecture enhancements for 5G System (5GS) to support network data analytics services;
- nplcit3: 3GPP TS 29.520, 5G System; Network Data Analytics Services; Stage 3;
- nplcit4: 3GPP TS 23.502, Procedures for the 5G System (5GS);
- nplcit5: 3GPP TS 28.533, Management and orchestration; Architecture framework; and
- nplcit6: 3GPP TR 23.734, Study on enhancement of 5G System (5GS) for vertical and Local Area Network (LAN) services.

## Claims

1. A method for determining a repartition of a set of user equipments handled by a wireless communication system,
the wireless communication system comprising a core network component comprising a network functional entity comprising a network data analytics function (NWDAF) and/or a network exposure function (NEF), the method comprising, at the network functional entity:
- obtaining a grouping criterion from a requesting party, and
- providing to the requesting party a repartition of at least part of the set of user equipments into groups of user equipments formed according to said grouping criterion.

2. The method of claim 1, wherein the requesting party is an application function of the core network component, such as a Time Sensitive Network application function of a wireless bridge communication system.

3. The method of claim 1 or 2, wherein the grouping criterion is associated to a list of user equipments provided by the requesting party and the repartition provided to the requesting party relates to a filtered set of user equipments obtained by filtering the set of user equipments according to the list.

4. The method of any one of claims 1 to 3, wherein the grouping criterion relates to:
- an independent quality of experience provided at the user equipments by the communication system, and/or
- a radio quality of communication channels between the user equipments and the communication system and/or
- a mobility behavior of the user equipments.

5. The method of any one of claims 1 to 4, wherein:
- the wireless communication system further comprises a radio access network,
- the grouping criterion relates to a data flow performance through the radio access network, and
- the method further comprises, at the network functional entity:
- interrogating the radio access network upon clustering information related to the grouping criterion, and
- obtaining the repartition determined based on the clustering information.

6. The method of claim 5, wherein the radio access network comprises a plurality of base stations, the method further comprising:
- per base station, determining the clustering information for said base station, and
- gathering, at the radio access network or at the core network component, the clustering information from each base station, and
wherein the repartition is determined based on the gathered clustering information.

7. The method of any one of claims 1 to 4, wherein:
- the grouping criterion relates to a data flow performance through the wireless communication system, and
- upon obtaining the grouping criterion, the network functional entity triggers measurements related to said data flow performance in order to determine the repartition.

8. The method of claim 7, wherein:
- the core network comprises a user plane function, and
- triggering measurements related to said data flow performance comprises requesting the user plane function to monitor a quality-of-service performance either on an existing traffic or by initiating a traffic injection.

9. The method of any one of the preceding claims, wherein the core network component triggers measurements related to the grouping criterion in order to determine the repartition..

10. A wireless communication system handling a set of user equipments,
the wireless communication system further comprising a core network component comprising a network functional entity comprising a network data analytics function (NWDAF) and/or a network exposure function (NEF), the network functional entity being configured for:
- obtaining a grouping criterion from a requesting party, and
- providing to the requesting party a repartition of at least part of the set of user equipments into groups of user equipments formed according to said grouping criterion.

11. A computer program comprising instructions which, when the program is executed by a computer, cause the computer to carry out the method of any one of claims 1 to 9.
